# EUROPEAN PATENT APPLICATION

(11) **EP 4 325 598 A2**
(43) Date of publication of application: **21.02.2024**
(21) Application number: 23171871.9
(22) Date of filing: 05.05.2023
(51) Int. Cl.: H01M 4/134, H01M 4/136, H01M 4/38, H01M 4/40, H01M 4/58, H01M 10/052, H01M 10/054, H01M 10/44

(54) **DUAL-CATION METAL BATTERY AND CHARGING AND DISCHARGING METHOD THEREOF**

(30) Priority: 18.08.2022 TW 111131180
(71) Applicant: Advanced Lithium Electrochemistry Co., Ltd., Taoyuan City 330 (TW)
(72) Inventor: Hsieh, Han-Wei, 330 Taoyuan City (TW); Li, Yi-Ting, 330 Taoyuan City (TW); HUANG, An-Feng, 330 Taoyuan City (TW)
(74) Representative: 2K Patentanwälte Blasberg Kewitz & Reichel

(57) **Abstract**

A dual-cation metal battery (1) and a charging and discharging method thereof are disclosed to reduce the cost of materials, maintain the long-term service life and provide multiple varied applications. The dual-cation metal battery (1) includes a positive electrode (10), a negative electrode (20), an electrolyte solution (30) and a separator (40). The positive electrode (10) includes a positive-electrode material (11) selected from the group consisting of heterosite (FePO₄), lithium iron phosphate (LiFePO₄) and LiₓNa₁₋ₓFeO₄, and 0<x<1. The negative electrode (20) includes a metal mixture (21) consisting of lithium metal and sodium metal, and the weight ratio of lithium metal to sodium metal is 1:3. The electrolyte solution (30) is disposed between the positive electrode (10) and the negative electrode (20). The separator (40) is disposed in the electrolyte solution (30), and the positive electrode (10) and the negative electrode (20) are separated from each other by the separator (40). By using the different charging and discharging modes, different electrical results are presented in the dual-cation metal battery (1).

## Description

### FIELD OF THE INVENTION

The present disclosure relates to a secondary battery, and more particularly to a dual-cation metal battery and a charging and discharging method thereof to reduce the cost of materials, maintain the long-term service life and provide multiple varied applications.

### BACKGROUND OF THE INVENTION

Lithium-ion battery (Lithium-ion battery) is a secondary battery that can be recharged and discharged repeatedly. With the lithium ions moved between the positive electrode and the negative electrode, the lithium-ion battery is capable of implementing the charging and discharging work. Therefore, the lithium-ion battery needs to use an intercalated lithium compound as the electrode material. The positive electrode materials used in the conventional lithium-ion batteries are mainly the lithium cobalt oxide (LiCoO₂), the lithium manganate (LiMn₂0₄), the lithium nickelate (LiNiO₂) and the lithium iron phosphate (LiFePO₄). Particularly, since the lithium iron phosphate has the features of good safety, large specific capacity, long cycle life, high temperature resistance and low cost, the lithium iron phosphate batteries are widely used in an electric vehicle and energy storage equipment.

In recent years, with the extensive application of lithium-ion battery on the electric vehicle and the energy storage equipment, the prices of related raw materials have been caused to fluctuate drastically. Considering that the future demand will continue to increase, it is even more important to find alternatives to replace lithium ions. Furthermore, when looking for alternatives to replace lithium ions in lithium-ion battery, it is necessary to consider the impact of differences in voltage platforms on the convenience of use, the product life, and the battery stability.

Therefore, there is a need to provide a dual-cation metal battery and a charging and discharging method thereof to reduce the cost of materials, maintain the long-term service life, provide multiple varied applications and obviate the drawbacks encountered by the prior arts.

### SUMMARY OF THE INVENTION

One object of the present disclosure is to provide a dual-cation metal battery and a charging and discharging method thereof to reduce the cost of materials, maintain the long-term service life and provide multiple varied applications. The lithium ions and the sodium ions are allowed to be intercalated or intercalated together in the olivine structure of lithium iron phosphate (LiFePO₄) and heterosite (FePO₄), so as to form dual-cation positive electrode material of LiₓNa₁₋ₓFePO₄ with the olivine structure. Therefore, two different voltage platforms of LiFePO₄ and NaFePO₄ are provided in a metal battery. In the present disclosure, the sodium ions are used to replace part of the lithium ions to form the dual-cation positive electrode material LiₓNa₁₋ₓFePO₄, so that it is different from the conventional lithium-ion positive electrode material and the conventional sodium-ion positive electrode material, which is a single-cation cathode material. The dual-cation metal battery of the present disclosure uses sodium ions, which are more abundant in the earth's crustal elements, to replace part of the lithium ions. In addition to making secondary battery materials more sustainable, the voltage platform and the capacity greater than the sodium iron phosphate cathode material are provided and the multiple varied applications are achieved.

Another object of the present disclosure is to provide a dual-cation metal battery and a charging and discharging method thereof. In a dual cation metal battery, the lithium metal and the sodium metal are mixed as a composite negative electrode. Since the lithium metal (theoretical capacitance of lithium metal is 3840 mAh/g) and the sodium metal (theoretical capacitance of sodium metal is 1166 mAh/g) both have high capacitance per gram, it is helpful of reducing the thickness of the negative electrode, so as to achieve the purpose of increasing the energy density of the battery.

A further object of the present disclosure is to provide a dual-cation metal battery and a charging and discharging method thereof. The dual-cation metal battery includes the positive electrode materials such as heterosite (FePO₄), lithium iron phosphate (LiFePO₄) or LiₓNa₁₋ₓFePO₄ combined with a mixture of the lithium metal and the sodium metal. There are two different voltage platforms of LiFePO₄ and NaFePO₄ in the charging and discharging process. Preferably, different electrical properties are shown by using different charging and discharging modes in the case of the dual-cation positive electrode material of LiₓNa₁₋ₓFePO₄ matched with the lithium-sodium metal negative electrode. When the dual-cation metal battery is discharged in a ramp voltage mode, it allows to control the ratio of the lithium-ion intercalation structure and the sodium-ion intercalation structure by controlling the rate of voltage drop. On the other hand, the dual-cation metal battery can be used in an energy storage battery application that does not require a large discharge current output. For example, the dual-cation metal battery is used in a solar power generation system. The solar power is generated during the day with full sunlight, and the current from the solar panel can slowly fill the battery. When discharging at night, if a higher power is needed, it can be discharged through the constant-current-constant-voltage discharging mode. That is, the dual-cation metal battery is discharged through the LiFePO₄ voltage platform. On the contrary, if considering that the dual cation metal battery does not require high power output, it can be discharged using the ramp voltage discharging mode to make full use of the electricity released by the NaFePO₄ voltage platform. Therefore, the ramp voltage mode or constant- current-constant-voltage can be selected according to the actual application conditions.

In accordance with an aspect of the present disclosure, a dual-cation metal battery is provided and includes a positive electrode, a negative electrode, an electrolyte solution and a separator. The positive electrode includes a positive electrode material selected from the group consisting of heterosite (FePO₄), lithium iron phosphate (LiFePO₄) and LiₓNa₁₋ₓFePO₄, and 0<x<1. The negative electrode includes a metal mixture consisting of lithium metal and sodium metal, wherein a weight ratio of the lithium metal to the sodium metal is 1:3. The electrolyte solution is disposed between the positive electrode and the negative electrode. The separator is disposed in the electrolyte solution, wherein the positive electrode and the negative electrode are separated from each other by the separator.

In an embodiment, the dual-cation metal battery is charged and discharged through a constant-current-constant-voltage mode, wherein the constant-current-constant-voltage mode is a 0.1C constant-current-constant-voltage mode.

In an embodiment, the dual-cation metal battery is charged and discharged through a constant-current-constant-voltage mode and a ramp voltage mode switched, wherein the constant-current-constant-voltage mode is a 0.1C constant-current-constant-voltage mode, and the ramp voltage mode includes a charging-and-discharging interval ranged from 2.0 V to 4.0 V and a charging-and-discharging rate of ±0.2 mV/s

In an embodiment, the positive electrode material is LiₓNa₁₋ₓFePO₄, the dual-cation metal battery is charged through a constant-current-constant-voltage mode, and discharged through a ramp voltage mode, wherein the constant-current-constant-voltage mode is 0.1C constant-current-constant-voltage mode, and the ramp voltage mode includes a discharging interval ranged from 4.0 V to 2.0 V, and a discharging rate of - 0.2 mV/s.

In an embodiment, the ramp voltage mode includes the discharge interval ranged from 2.8 V to a cut-off voltage of 2.0 V.

In accordance with an aspect of the present disclosure, a charging and discharging method of a dual-cation metal battery is provided and includes: (a) providing a dual-cation metal battery comprising a positive electrode, a negative electrode, an electrolyte solution and a separator, wherein the positive electrode comprises a positive electrode material selected from the group consisting of heterosite (FePO₄), lithium iron phosphate (LiFePO₄) and LiₓNa₁₋ₓFePO₄, and 0<x<1, wherein the negative electrode comprises a metal mixture consisting of lithium metal and sodium metal, and a weight ratio of the lithium metal to the sodium metal is 1:3, wherein the electrolyte solution is disposed between the positive electrode and the negative electrode, wherein the separator is disposed in the electrolyte solution, and the positive electrode and the negative electrode are separated from each other by the separator; and(b) selecting a constant-current-constant-voltage mode or a ramp voltage mode for charging or discharging the dual-cation metal battery.

In an embodiment, the dual-cation metal battery is charged and discharged through the constant-current-constant-voltage mode in the step (b), wherein the constant-current-constant-voltage mode is a 0.1C constant-current-constant-voltage mode.

In an embodiment, the dual-cation metal battery is charged and discharged through the constant-current-constant-voltage mode and the ramp voltage mode switched in the step (b), wherein the constant-current-constant-voltage mode is a 0.1C constant-current-constant-voltage mode, and the ramp voltage mode includes a charging-and-discharging interval ranged from 2.0 V to 4.0 V and a charging-and-discharging rate of ±0.2 mV/s.

In an embodiment, the positive electrode material is LiₓNa₁₋ₓFePO₄, the dual-cation metal battery is charged through the constant-current-constant-voltage mode, and discharged through the ramp voltage mode in the step (b), wherein the constant-current-constant-voltage mode is 0.1C constant-current-constant-voltage mode, and the ramp voltage mode includes a discharging interval ranged from 4.0 V to 2.0 V, and a discharging rate of -0.2 mV/s.

In an embodiment, the ramp voltage mode includes the discharge interval ranged from 2.8 V to a cut-off voltage of 2.0 V.

### BRIEF DESCRIPTION OF THE DRAWINGS

The above contents of the present disclosure will become more readily apparent to those ordinarily skilled in the art after reviewing the following detailed description and accompanying drawings, in which:
FIG. 1 is a schematic view illustrating a dual-cation metal battery according to an embodiment of the present disclosure;
FIG. 2 is a cyclic voltammogram showing the dual-cation positive electrode material of the dual-cation metal battery according the embodiment of the present disclosure and compared with LiFePO₄, NaFePO₄;
FIG. 3 is a cyclic voltammogram shows the dual-cation metal battery including the positive electrode material of Li_{0.25}Na_{0.75}FePO₄ according the embodiment of the present disclosure under different cut-off voltage ranges;
FIG. 4 shows a cyclic charge/discharge testing of the dual-cation metal battery including the positive electrode material of Li_{0.25}Na_{0.75}FePO₄ through the 0.1C constant-current-constant-voltage (CC-CV) mode;
FIG. 5 shows a cyclic charge/discharge testing of the dual-cation metal battery including the positive electrode material of Li_{0.25}Na_{0.75}FePO₄ through the ramp voltage (V-ramp) mode;
FIG. 6 shows a cyclic charge/discharge testing of a coin cell with heterosite/ sodium-metal anode through the ramp voltage mode;
FIG. 7 shows a cyclic charge/discharge testing of the dual-cation metal battery including the positive electrode material of Li_{0.25}Na_{0.75}FePO₄ through the constant-current-constant-voltage mode and the ramp voltage mode switched;
FIG. 8 shows a cyclic charge/discharge testing of the dual-cation metal battery including the positive electrode material of Li_{0.25}Na_{0.75}FePO₄ through the constant-current-constant-voltage mode for charging and the ramp voltage mode for discharging; and
FIG. 9 shows a cyclic charge/discharge testing of the dual-cation metal battery including the positive electrode material of heterosite through the constant-current-constant-voltage mode and the ramp voltage mode switched.

### DETAILED DESCRIPTION OF THE PREFERRED EMBODIMENT

The present disclosure will now be described more specifically with reference to the following embodiments. It is to be noted that the following descriptions of preferred embodiments of this disclosure are presented herein for purpose of illustration and description only. It is not intended to be exhaustive or to be limited to the precise form disclosed. For example, the formation of a first feature over or on a second feature in the description that follows may include embodiments in which the first and second features are formed in direct contact, and may also include embodiments in which additional features may be formed between the first and second features, such that the first and second features may not be in direct contact. In addition, the present disclosure may repeat reference numerals and/or letters in the various examples. This repetition is for the purpose of simplicity and clarity and does not in itself dictate a relationship between the various embodiments and/or configurations discussed. Further, spatially relative terms, such as "inner," "outer," "high," "low" and the like, may be used herein for ease of description to describe one element or feature's relationship to another element(s) or feature(s) as illustrated in the figures. The spatially relative terms are intended to encompass different orientations of the device in use or operation in addition to the orientation depicted in the figures. The apparatus may be otherwise oriented (rotated 90 degrees or at other orientations) and the spatially relative descriptors used herein may likewise be interpreted accordingly. When an element is referred to as being "connected," or "coupled," to another element, it can be directly connected or coupled to the other element or intervening elements may be present. Although the wide numerical ranges and parameters of the present disclosure are approximations, numerical values are set forth in the specific examples as precisely as possible. In addition, although the "first," "second," "third," and the like terms in the claims be used to describe the various elements can be appreciated, these elements should not be limited by these terms, and these elements are described in the respective embodiments are used to express the different reference numerals, these terms are only used to distinguish one element from another element. For example, a first element could be termed a second element, and, similarly, a second element could be termed a first element, without departing from the scope of example embodiments. Besides, "and / or" and the like may be used herein for including any or all combinations of one or more of the associated listed items. Alternatively, the word "about" means within an acceptable standard error of ordinary skill in the art-recognized average. In addition to the operation / working examples, or unless otherwise specifically stated otherwise, in all cases, all of the numerical ranges, amounts, values and percentages, such as the number for the herein disclosed materials, time duration, temperature, operating conditions, the ratio of the amount, and the like, should be understood as the word "about" decorator. Accordingly, unless otherwise indicated, the numerical parameters of the present invention and scope of the appended patent proposed is to follow changes in the desired approximations. At least, the number of significant digits for each numerical parameter should at least be reported and explained by conventional rounding technique is applied. Herein, it can be expressed as a range between from one endpoint to the other or both endpoints. Unless otherwise specified, all ranges disclosed herein are inclusive.

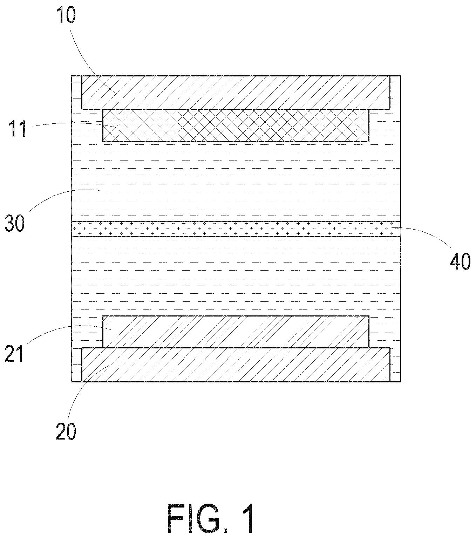

FIG. 1 is a schematic view illustrating a dual-cation metal battery according to an embodiment of the present disclosure. In the embodiment, the dual-cation metal battery 1 (or referred to as the metal battery) of the present disclosure includes a positive electrode 10, a negative electrode 20, an electrolyte solution 30 and a separator 40. The positive electrode 10 includes a positive electrode material 11. Preferably but not exclusively, the positive electrode material 11 is selected from the group consisting of heterosite (FePO₄), lithium iron phosphate (LiFePO₄) and LiₓNa₁₋ₓFePO₄, and 0<x<1. The negative electrode 20 includes a metal mixture 21. Preferably but not exclusively, the metal mixture 21 I consisting of lithium metal and sodium metal, and a weight ratio of the lithium metal to the sodium metal is 1:3. The electrolyte solution is 1.0 M lithium hexafluorophosphate (LiPF₆)/sodium hexafluorophosphate (NaPF₆) in propylene carbonate (PC) solution, and disposed between the positive electrode 10 and the negative electrode 20. In other embodiments, the electrolyte solution 20 is adjustable according to the practical requirements, and the present disclosure is not limited thereto. Preferably but not exclusively, the separator 40 is a glass-fiber filter paper and disposed in the electrolyte solution 30, and the positive electrode 10 and the negative electrode 20 are separated from each other by the separator 40. In this way, two different voltage platforms of LiFePO₄ and NaFePO₄ are provided in the metal battery 1, so as to achieve the purposes of reducing the cost of materials, maintaining the long-term service life and providing multiple varied applications

Notably, in the embodiment, the dual-cation positive electrode material of LiₓNa₁₋ₓFePO₄ included in the positive electrode material 11 refers to allowing Li⁺ ions and Na⁺ ions be intercalated or intercalated together in the structure of lithium iron phosphate (LiFePO₄), so that two positive electrode materials, LiFePO₄ and NaFePO₄ with the olivine structure, are disposed on the same positive electrode 10. After the lithium ions are removed from the olivine structure of lithium iron phosphate (LiFePO₄), the olivine structure of lithium iron phosphate (LiFePO₄) will transform into the structure of heterosite (FePO₄). The structure of heterosite (FePO₄) can exist stably in the atmospheric environment. There is no structural damage due to the removal of cations. Preferably but not exclusively, in an embodiment, the heterosite (FePO₄) is applied to the positive electrode material 11 of the metal battery 1, the cationic lithium or cationic sodium required for the subsequent charging and discharging is provided by the metal mixture 21 of the negative electrode 20. Certainly, the present disclosure is not limited thereto.

Preferably but not exclusively, in the embodiment, the positive electrode 10 is made into a positive electrode sheet in a manner that the proportioning is (the positive electrode material 11: the auxiliary carbon: the binder = 8:1:1). The electrolyte 30 is 1.0 M lithium hexafluorophosphate (LiPF₆)/sodium hexafluorophosphate (NaPF₆) in propylene carbonate (PC) solution. The separator 40 is a glass-fiber filter paper. For preparing the negative electrode 20 that includes the lithium-sodium metal mixture 21, the lithium metal and the sodium metal with a weight ratio of 1:3 are mixed, and then the lithium-sodium metal mixture is rolled to a thickness of 200 µm. Thereafter, a circular lithium-sodium metal negative electrode sheet with a diameter of 12 mm is cut out and served as the negative electrode 20 for testing. Notably, in an embodiment, the positive electrode 10 includes Li_{0.25}Na_{0.75}FePO₄ served as the positive electrode material 11. For preparing the positive electrode 10 including the positive electrode material of Li_{0.25}Na_{0.75}FePO₄, a positive electrode sheet of LiFePO₄, a lithium foil, a separator and 1.0 M LiPF₆ ethylene carbonate (EC)/dimethyl carbonate (DMC) electrolyte solution are assembled in a Swagelok three-electrode battery. Then, a 0.1C slow charging is performed and cooperated with charging time. After 75% of the lithium ions is removed, the Swagelok battery is dissembled, the positive electrode sheet containing 25% lithium ions is taken out. Dimethyl carbonate (DMC) solvent is used to rinse the positive electrode containing 25% lithium ions three times to remove excess electrolyte. In that, the Li_{0.25}FePO₄ material is be obtained, and the positive electrode 10 with the positive electrode material 11 is pretreated. Thereafter, the rinsed positive electrode 10, the electrolyte solution 30 of 1.0 M LiPF₆/NaPF₆ in propylene carbonate (PC) solution, the separator 40 of the glass-fiber filter paper and the negative electrode 20 of the lithium metal and the sodium metal are assembled in a button cell, so as to obtain the metal battery 1 for testing a dual-cation positive electrode material 11. In the embodiment, in order to ensure that sodium ions are intercalated in the structure of the positive electrode material 11, the aforementioned test half-cell is discharged in a ramp voltage (V-ramp) mode. That is, the discharging is performed from 2.8 V at a rate of -0.2 mV/sec to a cut-off voltage of 2.0 V to ensure that the sodium ions are intercalated in the structure of the positive electrode material 11 to form Li_{0.25}Na_{0.75}FePO₄. Certainly, in other embodiments, the positive electrode material 11 is selected from the group consisting of heterosite (FePO₄), lithium iron phosphate (LiFePO₄) and LiₓNa₁₋ₓFePO₄. The positive electrode material 11 is adjustable according to the practical requirements, and the present disclosure is not limited thereto.

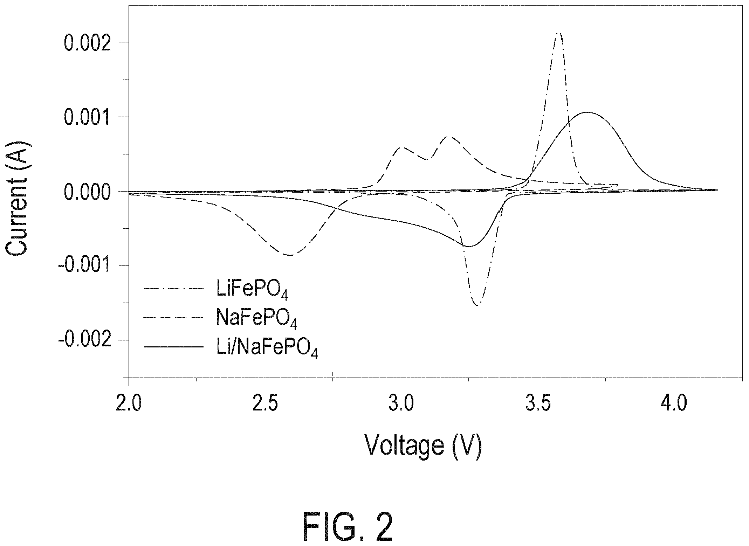

In the embodiment, the dual-cation positive electrode material 11 in the metal battery 1 is further analyzed for electrochemical characteristics by cyclic voltammetry. Taking the aforementioned metal battery 1 with Li_{0.25}Na_{0.75}FePO₄ as an example to test the dual-positive electrode material 11. After a slow scan is performed at a scan rate of 0.1 mV/s by cyclic voltammetry, the oxidation peak and the reduction peak of the obtained dual-cation positive electrode 11 are shown in FIG. 2. For the positive electrode material 11 of Li_{0.25}Na_{0.75}FePO₄, the highest value of its oxidation peak appears at 3.7 V, which is higher than that of LiFePO₄ and NaFePO₄. In the present embodiment, the electrolyte solvent used in the metal battery 1 is PC, which is different from the electrolyte impedance of the electrolyte solvent used for testing LiFePO₄ and NaFePO₄. Since the impedance of the electrolyte solution 30 of the present disclosure is higher, the delay of the oxidation peak occurs. Certainly, in other embodiment, the electrolyte solution is further optimized to reduce the delay of the oxidation peak due to high impedance, and it is not redundantly described herein. In addition, regarding the part of the reduction peak, the positive electrode material 11 of Li_{0.25}Na_{0.75}FePO₄ has the reduction peak ranged from 3.3 V (corresponding to LiFePO₄) to 2.6 V (corresponding to NaFePO₄). It can be seen that the lithium ions and the sodium ions coexist in the positive electrode material 11 of LiₓNa₁₋ₓFePO₄ of the present disclosure. Notably, the ionic radius of lithium ions is 0.76 Å, the ionic radius of sodium ions is 1.02 Å, the volume of sodium ions is 34% larger than that of lithium ions, and the diffusion rate of sodium ions is 1/2 of that of lithium ions. 10. Therefore, it is allowed to select an appropriate charging and discharging mode to change the result of intercalation of lithium ions and sodium ions into the positive electrode material 11 of the metal battery 1.

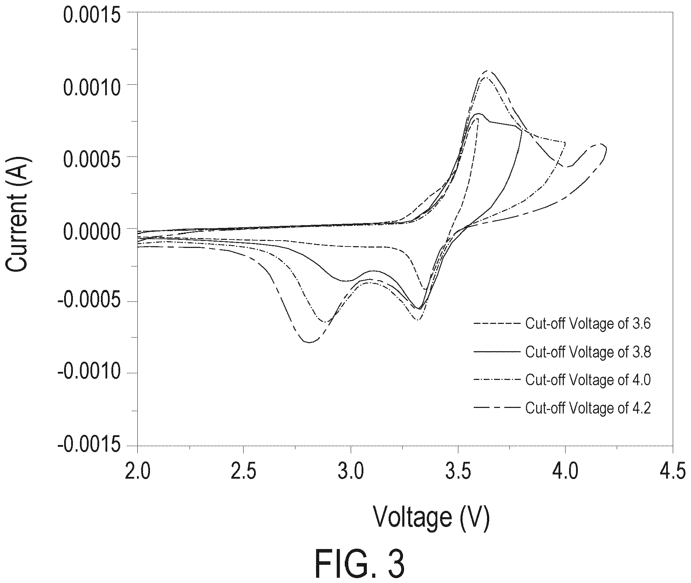

FIG. 3 is a cyclic voltammogram shows the dual-cation metal battery including the positive electrode material of Li_{0.25}Na_{0.75}FePO₄ according the embodiment of the present disclosure under different cut-off voltage ranges. In the embodiment, the dual-cation metal battery 1 including the positive electrode material 11 of Li_{0.25}Na_{0.75}FePO₄ is further tested with four oxidation reaction cut-off voltages of 3.6 V, 3.8 V, 4.0 V and 4.2 V, and a scan rate is 0.2 mV/s. The testing results of cyclic voltammetry with different cut-off voltages are shown in FIG. 3. As shown in FIG. 3, when the cut-off voltage is set at 3.6 V and 3.8 V, the highest values of the oxidation peaks are similar. In addition, when the cut-off voltage is set at 4.0 V and 4.2 V, the highest values of the oxidation peaks are similar. The area of the oxidation peak is increased as the cut-off voltage is set higher, and the area of the oxidation peak is larger. That is, the more lithium ions or sodium ions are migrated out of the structure of the positive electrode material 11. In addition, regarding the of the reduction peak, with the difference of the charging cut-off voltage, the reduction reaction potentials of the LiFePO₄ voltage platform and the NaFePO₄ voltage platform have different levels of response currents. When the oxidation reaction cut-off voltage is 3.6 V, judging from the area of the oxidation peak, it can be seen that fewer cations are moved out from the structure of the positive electrode material 11, so that vacant position in the structure is also less. Therefore, during the reduction reaction, in the range of LiFePO₄ reduction voltage (3.2~3.5 V), the phenomenon of lithium-ion intercalation structure appears first, and a higher response current is generated in this interval. When the oxidation reaction cut-off voltages are 3.8 V, 4.0 V, and 4.2 V, respectively, the area of the oxidation peak are increased gradually. That is, the number of cations that moved out of the structure of the positive electrode material 11 is increased gradually. Therefore, when scanning the reduction reaction, the response currents produced at the reduction reaction potentials of the LiFePO₄ voltage platform and the NaFePO₄ voltage platform have different changes. It can be known that the metal battery 1 of the present disclosure is allowed to adjust the number of lithium ions or sodium ions intercalated into the structure of the positive electrode material 11 through different scanning cut-off voltages and scanning rates in the oxidation reaction. Certainly, the present disclosure is not limited thereto.

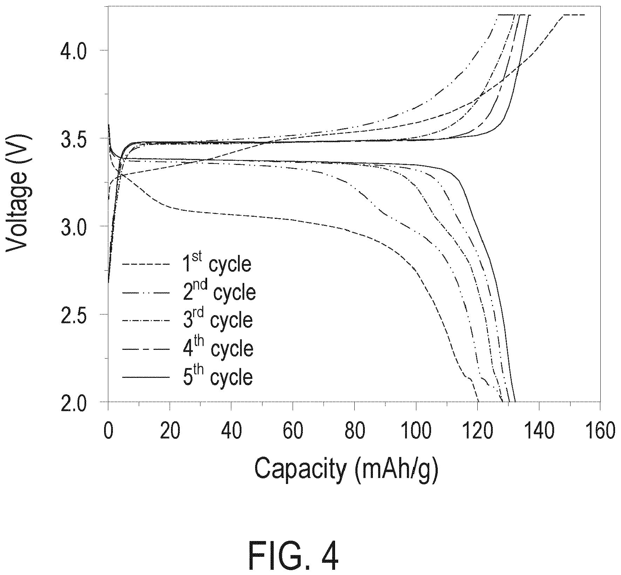

FIG. 4 shows a cyclic charge/discharge testing of the dual-cation metal battery including the positive electrode material of Li_{0.25}Na_{0.75}FePO₄ through the 0.1C constant-current-constant-voltage (CC-CV) mode. When the dual-cation metal battery 1 including the positive electrode material 11 of Li_{0.25}Na_{0.75}FePO₄ is charged and discharged through the constant-current-constant-voltage (CC-CV) mode, two charging platforms of NaFePO₄ are observed in the first cycle of charging, and the discharge platforms of LiFePO₄ and NaFePO₄ are observed in the first cycle of discharging. Notably, the discharge capacity of NaFePO₄ is accounted for a higher proportion, and it indicates that Li_{0.25}Na_{0.75}FePO₄ has a higher proportion of sodium ions in the first cycle of charging and discharging. So the electricity released during discharging is mainly provided by the electricity released by NaFePO₄. In the second cycle of charging, the proportion of the charging voltage platform of NaFePO₄ is decreased. Moreover, in the second cycle of discharging, a decreasing pattern is shown in the discharging voltage platform of NaFePO₄. Instead, the proportion of discharging voltage platform of LiFePO₄ is increased gradually. In case of charging and discharging from the third cycle to the fifth cycle, the discharging voltage platform and discharging voltage of NaFePO₄ are disappeared gradually. The charging and discharging capacities in the first cycle to the fifth cycle are shown in Table 1. It is observed from the charging and discharging capacities in Table 1 that the 0.1 C discharge capacity of NaFePO₄ is about 120~125 mAh/g. When 25% of the sodium ions are replaced by the lithium ions in the structure to make Li_{0.25}Na_{0.75}FePO₄, the 0.1 C discharging capacity of Li_{0.25}Na_{0.75}FePO₄ is higher than the 0.1C discharging capacity of NaFePO₄. On the other hand, LiₓNa₁₋ₓFePO₄ provides a discharging capacity higher than that of NaFePO₄, and LiₓNa₁₋ₓFePO₄ further includes two discharging voltage platforms of LiFePO₄ and NaFePO₄. Therefore, it provides a discharge power higher than that of single discharging platform of NaFePO₄. Notably, from the perspective of the charging and discharging voltage platform and the trend of capacity change, the constant-current-constant-voltage mode (CC-CV) is suitable to utilize in the dual-cation metal battery 1 with the positive electrode material 11 of Li_{0.25}Na_{0.75}FePO₄ when a higher proportion of discharging capacity of LiFePO₄ or a higher discharging power is required. Since the diffusion rate of sodium ions is 1/10 of that of lithium ions, when using constant current to discharge, the discharging voltage of NaFePO₄ is low, and the lithium ions are intercalated into the structure of the positive electrode material 11 under a relatively high voltage condition. Certainly, the charging and discharging modes of the metal battery 1 of the present disclosure is not limited thereto.

**Table 1 lists the charging and discharging capacities of the dual-cation metal battery with the positive electrode material of Li_{0.25}Na_{0.75}FePO₄ through the 0.1C constant-current-constant-voltage (CC-CV) mode.**

| Cycle # | Capacity (mAh/g) | |
|---|---|---|
| | Charging | Discharging |
| 1 | 157 | 120 |
| 2 | 131 | 128 |
| 3 | 135 | 128 |
| 4 | 136 | 130 |
| 5 | 138 | 132 |

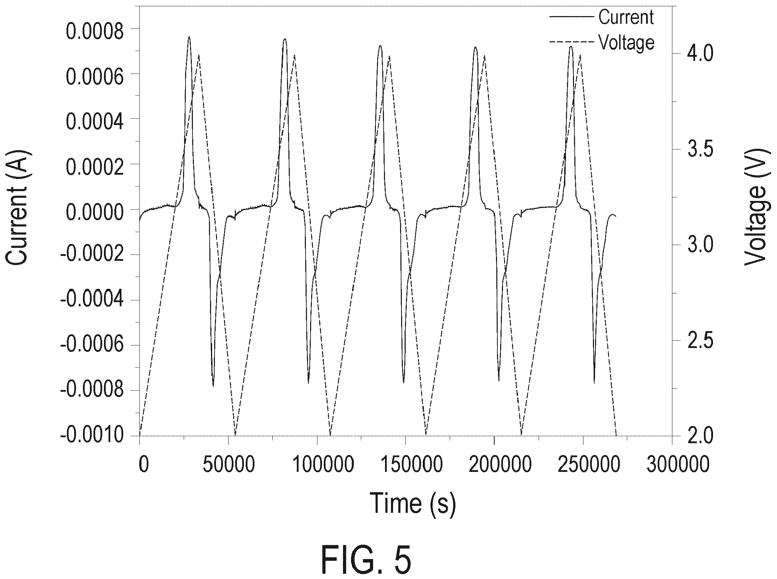

FIG. 5 shows a cyclic charge/discharge testing of the dual-cation metal battery including the positive electrode material of Li_{0.25}Na_{0.75}FePO₄ through the ramp voltage (V-ramp) mode. When the dual-cation metal battery 1 including the positive electrode material 11 of Li_{0.25}Na_{0.75}FePO₄ is charged and discharged through the ramp voltage mode, a charging-and-discharging interval is set and ranged from 2.0 V to 4.0 V, a charging rate is set at +0.2 mV/s and a discharging rate is set at -0.2 mV/s. The results obtained are shown in FIG. When the ramp voltage mode is utilized to charge, a large response current peak appears in a voltage interval ranged from 3.2 V to 3.8 V. As the maximum value of the response current is about 0.7mA, the charging is carried out at a ratio about 0.6 C. In addition, when the ramp voltage mode is utilized to discharge, the maximum value of the response current is about 0.75 mA, and the discharging is carried out at a rate about 0.7 C. Notably, when the ramp voltage mode is used to discharge, there is a turning point near the discharge voltage of 2.7V. So it can be used to judge that the ramp voltage mode is used to discharge. In other words, when the discharging conditions are set appropriately, the dual-cation metal battery 1 with the positive electrode material 11 of Li_{0.25}Na_{0.75}FePO₄ is allowed to provide the discharging voltage platform of NaFePO₄ and the discharge capacity of NaFePO₄.

Table 2 lists the charging and discharging capacities of the dual-cation metal battery 1 with the positive electrode material 11 of Li_{0.25}Na_{0.75}FePO₄ through the ramp voltage mode (V-ramp). The obtained data are shown in Table 2. The charging and discharging capacities and the voltage interval corresponding to the response current of the metal battery 1 are similar to the charging and discharging capacities and the charging and discharging voltage platform of LiFePO₄. Therefore, it can be inferred that the main proportion of the charging and discharging capacity obtained by charging and discharging Li_{0.25}Na_{0.75}FePO₄ through the ramp voltage mode is mostly the charging and discharging capacity provided by LiFePO₄.

**Table 2 lists the charging and discharging capacities of the dual-cation metal battery with the positive electrode material of Li_{0.25}Na_{0.75}FePO₄ through the ramp voltage (V-ramp) mode.**

| Cycle # | Capacity (mAh/g) | |
|---|---|---|
| | Charging | Discharging |
| 1 | 163 | 157 |
| 2 | 162 | 156 |
| 3 | 162 | 156 |
| 4 | 161 | 155 |
| 5 | 161 | 155 |

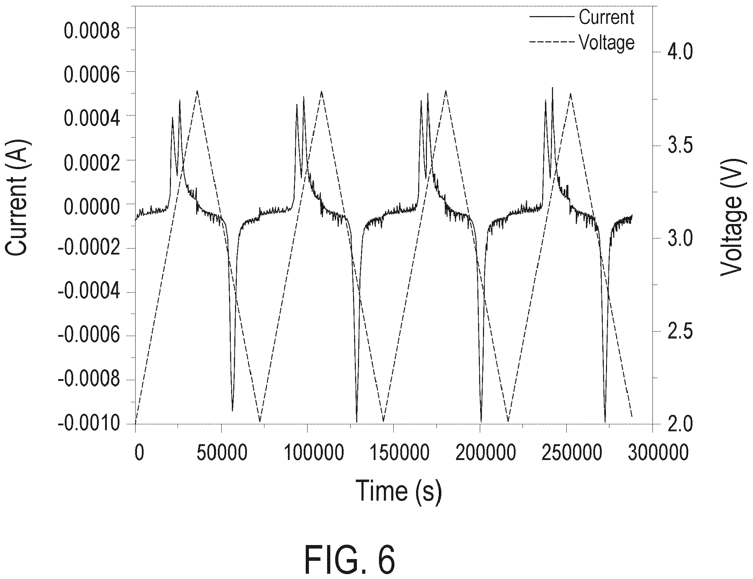

In addition, according to the testing results, it is observed that the lithium ions and the sodium ions are intercalated into the structure, when the aforementioned dual-cation metal battery with the positive electrode material 11 of Li_{0.25}Na_{0.75}FePO₄ is charged and discharged through the ramp voltage mode. FIG. 6 shows a cyclic charge/discharge testing of a coin cell with heterosite/ sodium-metal anode through the ramp voltage mode. When the sodium ions are intercalated and intercalated into the structure of heterosite (FePO₄) by using the ramp voltage for charging and discharging, a comparative example of a coin cell with the positive electrode of heterosite (FePO₄) and the negative electrode of sodium metal is provided to further understand the relationship between voltage and current. The charging and discharging test is carried out through the ramp voltage to observe the relative relationship between voltage and current. Preferably but not exclusively, the charging-and-discharging interval is ranged from 2.0 V to 3.6 V, and the charging-and-discharging rate is ±0.2 mV/s. During the charging process, there are two large response current peaks. It is similar to that the two voltage platforms are observed when charging and discharging the constant-current-constant-voltage mode. That is, there are two phase transition points in the structure of olivine NaFePO₄. In other words, the phases that appear during the redox process of olivine NaFePO₄ are FePO₄, Na_{0.7}FePO₄ and NaFePO₄, so that two voltage platforms are observed during the charging process. During the discharging process, the maximum response current is observed in the discharging voltage interval ranged from 3.0 V to 2.6 V, which is similar to the discharge voltage of 2.75 V when the olivine NaFePO₄ is charged and discharged through the constant-current-constant-voltage mode.

**Table 3 lists the charging and discharging capacities of the coin cell with the positive electrode of heterosite and the negative electrode of sodium metal through the ramp voltage (V-ramp) mode.**

| Cycle # | Capacity (mAh/g) | |
|---|---|---|
| | Charging | Charging |
| 1 | 123.9 | 125.8 |
| 2 | 126.4 | 123.2 |
| 3 | 127.3 | 123.0 |
| 4 | 128.6 | 123.9 |

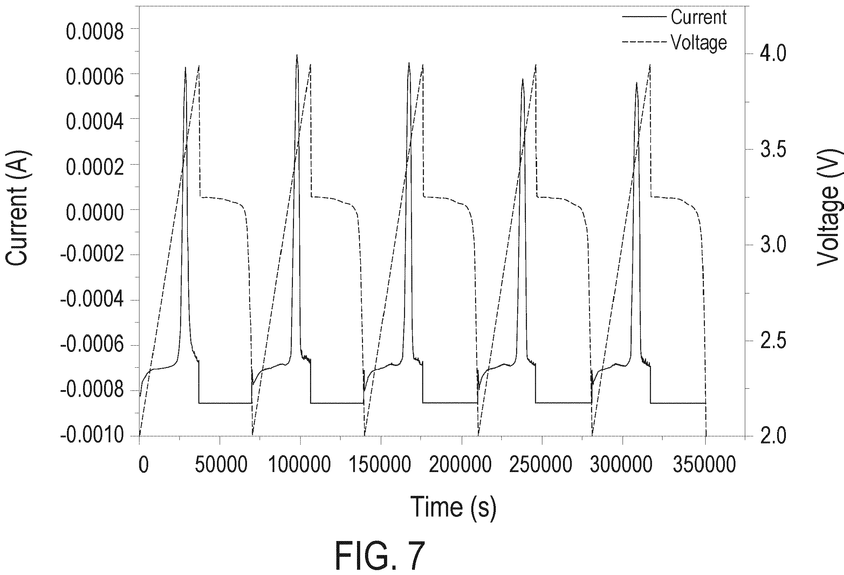

FIG. 7 shows a cyclic charge/discharge testing of the dual-cation metal battery including the positive electrode material of Li_{0.25}Na_{0.75}FePO₄ through the constant-current-constant-voltage mode and the ramp voltage mode switched. In the embodiment, the dual-cation metal battery 1 including the positive electrode material 11 of Li_{0.25}Na_{0.75}FePO₄ is charged and discharged through the constant-current-constant-voltage (CC-CV) mode and the ramp voltage (V-ramp) mode switched. Preferably but not exclusively, the metal battery 1 is charged through the ramp voltage mode in the charging process, the charging voltage interval is ranged from 2.0 V to 4.2 V, and the charging rate is 0.2 mV/s. Moreover, the metal battery 1 is discharged through the 0.1C constant-current discharge mode in the discharging process. In this way, the corresponding relationship of the current and the voltage and the charging and discharging capacities are observed. The testing results are shown in FIG. 7. According to the testing results, a response current is observed in the charging voltage interval ranged from 3.4 V to 3.8 V. At this time, the sodium ions and the lithium ions in the structure of the positive electrode material 11 begin to move out of the structure. When the discharging process is started through the constant-circuit discharging mode, the constant-current discharging is performed in the voltage interval with the higher discharge voltage 3.4 V, and the lithium ions are intercalated into the structure of the positive electrode material 11. Therefore, the discharging voltage platform is maintained between 3.3 V and 3.4 V, and this discharging voltage interval is the discharging voltage platform of the LiFePO₄.

Table 4 lists the charging and discharging capacities of the dual-cation metal battery 1 with the positive electrode material 11 of Li_{0.25}Na_{0.75}FePO₄ through the constant-current-constant-voltage (CC-CV) mode and the ramp voltage (V-ramp) mode switched. As shown in Table 4, after comparing the charging capacity, the discharging capacity and the relationship of the circuit and the voltage, it can be inferred that the charging capacity and discharging capacity measured in testing is provided through the LiFePO₄ voltage platform in LiₓNa₁₋ₓFePO₄.

**Table 4 lists the charging and discharging capacities of the dual-cation metal battery with the positive electrode material of Li_{0.25}Na_{0.75}FePO₄ through the constant-current-constant-voltage (CC-CV) mode and the ramp voltage (V-ramp) mode switched.**

| Cycle # | Capacity (mAh/g) | |
|---|---|---|
| | Charging | Charging |
| 1 | 160 | 155 |
| 2 | 166 | 155 |
| 3 | 166 | 158 |
| 4 | 165 | 158 |
| 5 | 164 | 158 |

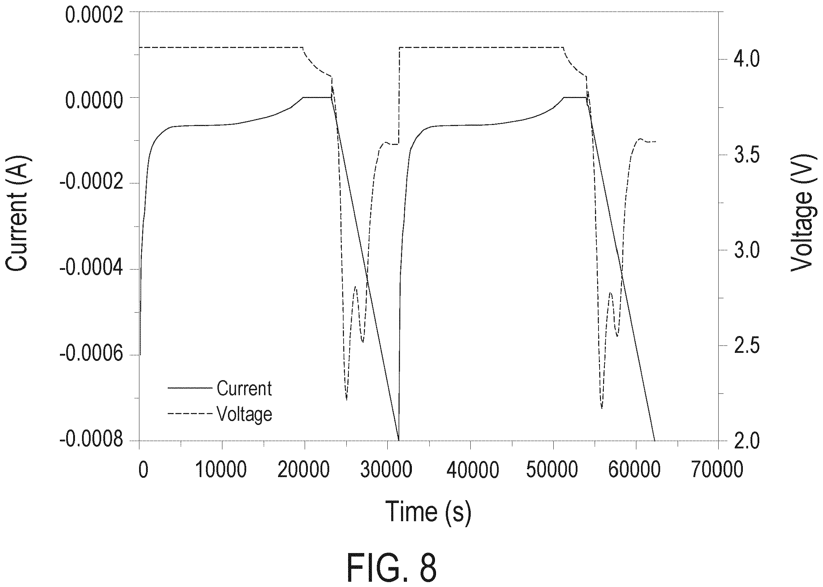

From the above, the sodium ions and the lithium ions are removed from the structure of the positive electrode material 11 in the charging process of the dual-cation metal battery 1 containing positive electrode material 11 of Li_{0.25}Na_{0.75}FePO₄. Moreover, in the discharging process, the sodium ions or the lithium ions are moved from the negative electrode 20 to the positive electrode 10 and then intercalate into the structure of the positive electrode material 11. It can be understood from the foregoing descriptions that the voltage platforms for the intercalation of sodium ions or lithium ions into the structure of the positive electrode material 11 are different, and controlling the voltage in the process is regarded as an important factor, so as to allow the sodium ions or the lithium ions to be intercalated into the structure of the positive electrode material 11 sequentially to complete the discharging behavior. In an embodiment, the constant-current-constant-voltage mode is used for charging during the charging process, and the ramp voltage mode is used for discharging during the discharging process. The testing results are shown in FIG. 8. As shown in FIG. 8, when the ramp voltage discharging mode is used to discharge, there are two different response current peaks observed in the discharge intervals of LiFePO₄ and NaFePO₄, respectively. Accordingly, the charging process performed through the constant-current-constant-voltage mode with the discharging process performed through the ramp voltage mode is suitable for the dual-cation metal battery 1 containing the positive electrode material 11 of LiₓNa₁₋ₓFePO₄ positive electrode material 11. The present disclosure is not limited thereto.

Table 5 lists the charging and discharging capacities of the dual-cation metal battery 1 with the positive electrode material 11 of Li_{0.25}Na_{0.75}FePO₄ through the constant-current-constant-voltage (CC-CV) mode in the charging process and the ramp voltage (V-ramp) mode in the discharging process. As shown in Table 5 and the cyclic charge/discharge testing in FIG. 8, the discharging capacity measured through testing is the sum of the discharging capacities of the LiFePO₄ voltage platform and the NaFePO₄ voltage platform in Li_{0.25}Na_{0.75}FePO₄ at different stages of the discharge voltage.

**Table 5 lists the charging and discharging capacities of the dual-cation metal battery with the positive electrode material of Li_{0.25}Na_{0.75}FePO₄ through the constant-current-constant-voltage (CC-CV) mode in the charging process and the ramp voltage discharging mode in the discharging process.**

| Cycle # | Capacity (mAh/g) | |
|---|---|---|
| | Charging | Charging |
| 1 | 103.8 | 94.5 |
| 2 | 102.2 | 92.8 |

From the above, the lithium-sodium dual-cation positive electrode material 11 of the positive electrode 10 combined with the negative electrode 20 of the lithium-sodium metal mixture 21 is used in the metal battery 1 of the present disclosure. Moreover, in different usage situations, it allows to select different discharge modes to make the metal battery 1 exhibit different characteristics.

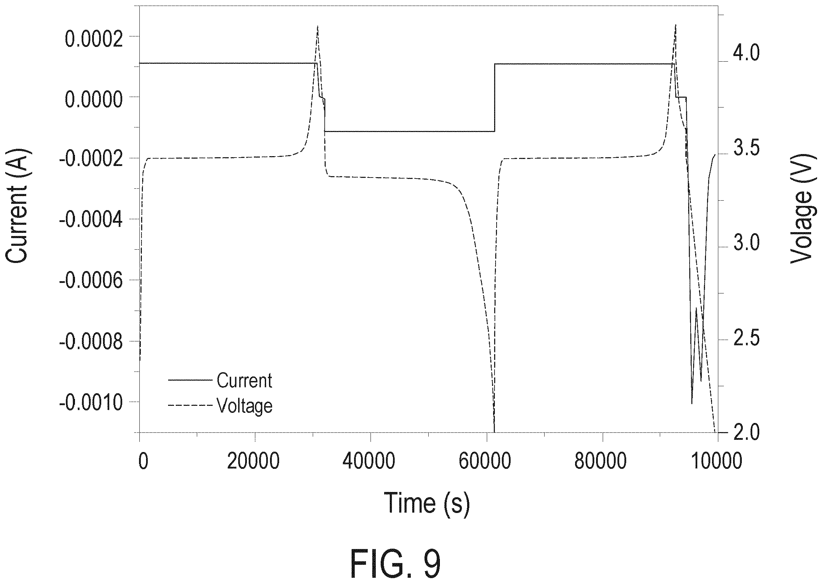

In an embodiment, the positive electrode 10 including the positive electrode material of the heterosite (FePO₄) and the negative electrode 20 including the lithium-sodium metal mixture 21 are used to produce the metal battery 1 for carrying out the testing of the mixed charging and discharging mode. The testing results are shown in FIG. 9. In the first cycle of charging and discharging through the 0.1 C constant-current-constant-voltage mode, the charging voltage platform and the discharging voltage platform are observed in FIG. 9, the measured charging capacity and discharging capacity are mostly provided through the LiFePO₄ voltage platform in the dual-cation positive electrode material 11. Preferably, the discharge capacity of the first cycle is 138.9 mAh/g. In the second cycle of charging through the 0.1 C constant-current-constant-voltage mode and discharging through the ramp voltage mode, two reduction peaks of the LiFePO₄ voltage platform and the NaFePO₄ voltage platform are observed in sequence during the discharging process. This phenomenon means that lithium ions and the sodium ions are sequentially intercalated into the structure of the positive electrode 10 according to the change of voltage during discharging. Preferably, the discharge capacity of the second cycle is 121.8 mAh/g. Moreover, one part of the discharging capacity through the LiFePO₄ voltage platform is 42.7 mAh/g in the discharging voltage interval ranged from 3.44 V to 3.0 V, and another part of the discharging capacity of the NafePO4 voltage platform is 79.1 mAh/g in the discharging voltage interval ranged from 2.99 V to 2.0 V. Since the proportions of the discharging capacity through the LiFePO₄ voltage platform and NaFePO₄ voltage platform is about 1:2, Li:Na in the positive electrode material 11 of the LiₓNa₁₋ₓFePO₄ can be estimated as 1:2. At this time, the structural formula of the positive electrode material 11 can be written as Li_{0.33}Na_{0.66}FePO₄.

**Table 6 lists the charging and discharging capacities of the dual-cation metal battery with the positive electrode material of heterosite (FePO₄) through the constant-current-constant-voltage (CC-CV) mode and the ramp voltage (V-ramp) mode.**

| Cycle # | Capacity (mAh/g) | |
|---|---|---|
| | Charging | Charging |
| 1 | 146.1 | 139.8 |
| 2 | 147.4 | 121.8 |

In the embodiment, the rate of voltage drop is controlled in the ramp voltage discharge mode to achieve the purpose of discharging. It allows to control the ratio of the lithium-ion intercalation structure and the sodium-ion intercalation structure. The dual-cation metal battery 1 is suitable for an energy storage battery application that does not require a large discharge current output. Preferably but not exclusively, the dual-cation metal battery 1 is used in a solar power generation system. The solar power is generated during the day with full sunlight, and the current from the solar panel can slowly fill the battery. For discharging at night to meet the requirements of higher power, the metal battery 1 can be discharged through the constant-current-constant-voltage discharging mode. That is, the dual-cation metal battery is discharged through the LiFePO₄ voltage platform. On the contrary, if considering that the dual cation metal battery 1 does not require high power output, it can be discharged through the ramp voltage discharging mode to make full use of the electricity released by the NaFePO₄ voltage platform. Therefore, the ramp voltage mode or constant- current-constant-voltage can be selected according to the actual application conditions. The present disclosure is not limited thereto and not redundantly described hereafter.

In summary, the present disclosure provides a dual-cation metal battery and a charging and discharging method thereof to reduce the cost of materials, maintain the long-term service life and provide multiple varied applications. The lithium ions and the sodium ions are allowed to be intercalated or intercalated together in the olivine structure of lithium iron phosphate (LiFePO₄) and heterosite (FePO₄), so as to form dual-cation positive electrode material of LiₓNa₁₋ₓFePO₄ with the olivine structure. Therefore, two different voltage platforms of LiFePO₄ and NaFePO₄ are provided in a metal battery. In the present disclosure, the sodium ions are used to replace part of the lithium ions to form the dual-cation positive electrode material LiₓNa₁₋ₓFePO₄, so that it is different from the conventional lithium-ion positive electrode material and the conventional sodium-ion positive electrode material, which is a single-cation cathode material. The dual-cation metal battery of the present disclosure uses sodium ions, which are more abundant in the earth's crustal elements, to replace part of the lithium ions. In addition to making secondary battery materials more sustainable, the voltage platform and the capacity greater than the sodium iron phosphate cathode material are provided and the multiple varied applications are achieved. In a dual cation metal battery, the lithium metal and the sodium metal are mixed as a composite negative electrode. Since the lithium metal (theoretical capacitance of lithium metal is 3840 mAh/g) and the sodium metal (theoretical capacitance of sodium metal is 1166 mAh/g) both have high capacitance per gram, it is helpful of reducing the thickness of the negative electrode, so as to achieve the purpose of increasing the energy density of the battery. The dual-cation metal battery includes the positive electrode materials such as heterosite (FePO₄), lithium iron phosphate (LiFePO₄) or LiₓNa₁₋ₓFePO₄ combined with a mixture of the lithium metal and the sodium metal. There are two different voltage platforms of LiFePO₄ and NaFePO₄ in the charging and discharging process. Preferably, different electrical properties are shown by using different charging and discharging modes in the case of the dual-cation positive electrode material of LiₓNa₁₋ₓFePO₄ matched with the lithium-sodium metal negative electrode. When the dual-cation metal battery is discharged in a ramp voltage mode, it allows to control the ratio of the lithium-ion intercalation structure and the sodium-ion intercalation structure by controlling the rate of voltage drop. On the other hand, the dual-cation metal battery can be used in an energy storage battery application that does not require a large discharge current output. For example, the dual-cation metal battery is used in a solar power generation system. The solar power is generated during the day with full sunlight, and the current from the solar panel can slowly fill the battery. When discharging at night, if a higher power is needed, it can be discharged through the constant-current-constant-voltage discharging mode. That is, the dual-cation metal battery is discharged through the LiFePO₄ voltage platform. On the contrary, if considering that the dual cation metal battery does not require high power output, it can be discharged using the ramp voltage discharging mode to make full use of the electricity released by the NaFePO₄ voltage platform. Therefore, the ramp voltage mode or constant- current-constant-voltage can be selected according to the actual application conditions.

## Claims

1. A dual-cation metal battery (1) **characterized by** comprising:
a positive electrode (10) comprising a positive electrode material (11) selected from the group consisting of heterosite (FePO₄), lithium iron phosphate (LiFePO₄) and LiₓNa₁₋ₓFePO₄, wherein 0<x<1;
a negative electrode (20) comprising a metal mixture (21) consisting of lithium metal and sodium metal, wherein a weight ratio of the lithium metal to the sodium metal is 1:3;
an electrolyte solution (30), disposed between the positive electrode (10) and the negative electrode (20); and
a separator (40) disposed in the electrolyte solution (30), wherein the positive electrode (10) and the negative electrode (20) are separated from each other by the separator (40).

2. The dual-cation metal battery (1) according to claim 1, wherein the dual-cation metal battery (1) is charged and discharged through a constant-current-constant-voltage mode, wherein the constant-current-constant-voltage mode is a 0.1C constant-current-constant-voltage mode.

3. The dual-cation metal battery (1) according to claim 1 or 2, wherein the dual-cation metal battery (1) is charged and discharged through a constant-current-constant-voltage mode and a ramp voltage mode switched, wherein the constant-current-constant-voltage mode is a 0.1C constant-current-constant-voltage mode, and the ramp voltage mode includes a charging-and-discharging interval ranged from 2.0 V to 4.0 V and a charging-and-discharging rate of +0.2 mV/s and -0.2 mV/s

4. The dual-cation metal battery (1) according to any of the claims 1 to 3, wherein the positive electrode material (11) is LiₓNa₁₋ₓFePO₄, the dual-cation metal battery (1) is charged through a constant-current-constant-voltage mode, and discharged through a ramp voltage mode, wherein the constant-current-constant-voltage mode is 0.1C constant-current-constant-voltage mode, and the ramp voltage mode includes a discharging interval ranged from 4.0 V to 2.0 V, and a discharging rate of -0.2 mV/s.

5. The dual-cation metal battery (1) according to claim 4, wherein the ramp voltage mode includes the discharge interval ranged from 2.8 V to a cut-off voltage of 2.0 V.

6. A charging and discharging method of a dual-cation metal battery (1), **characterized by** comprising:
(a) providing a dual-cation metal battery (1) comprising a positive electrode (10), a negative electrode (20), an electrolyte solution (30) and a separator (40), wherein the positive electrode (10) comprises a positive electrode material (11) selected from the group consisting of heterosite (FePO₄), lithium iron phosphate (LiFePO₄) and LiₓNa₁₋ₓFePO₄, and 0<x<1, wherein the negative electrode (20) comprises a metal mixture (21) consisting of lithium metal and sodium metal, and a weight ratio of the lithium metal to the sodium metal is 1:3, wherein the electrolyte solution (30) is disposed between the positive electrode (10) and the negative electrode (20), wherein the separator (40) is disposed in the electrolyte solution (30), and the positive electrode (10) and the negative electrode (20) are separated from each other by the separator (40); and
(b) selecting a constant-current-constant-voltage mode or a ramp voltage mode for charging or discharging the dual-cation metal battery (1).

7. The charging and discharging method of the dual-cation metal battery (1) according to claim 6, wherein the dual-cation metal battery (1) is charged and discharged through the constant-current-constant-voltage mode in the step (b), wherein the constant-current-constant-voltage mode is a 0.1C constant-current-constant-voltage mode.

8. The charging and discharging method of the dual-cation metal battery (1) according to claim 6 or 7, wherein the dual-cation metal battery (1) is charged and discharged through the constant-current-constant-voltage mode and the ramp voltage mode switched in the step (b), wherein the constant-current-constant-voltage mode is a 0.1C constant-current-constant-voltage mode, and the ramp voltage mode includes a charging-and-discharging interval ranged from 2.0 V to 4.0 V and a charging-and-discharging rate of ±0.2 mV/s.

9. The charging and discharging method of the dual-cation metal battery (1) according to any of the claims 6 to 8, wherein the positive electrode material (11) is LiₓNa₁₋ₓFePO₄, the dual-cation metal battery is charged through the constant-current-constant-voltage mode, and discharged through the ramp voltage mode in the step (b), wherein the constant-current-constant-voltage mode is 0.1C constant-current-constant-voltage mode, and the ramp voltage mode includes a discharging interval ranged from 4.0 V to 2.0 V, and a discharging rate of -0.2 mV/s.

10. The charging and discharging method of the dual-cation metal battery (1) according to claim 9, wherein the ramp voltage mode includes the discharge interval ranged from 2.8 V to a cut-off voltage of 2.0 V.
